# EUROPEAN PATENT APPLICATION

(11) **EP 4 472 271 A1**
(43) Date of publication of application: **04.12.2024**
(21) Application number: 23755723.6
(22) Date of filing: 08.02.2023
(51) Int. Cl.: H04W 24/06

(54) **METHOD AND APPARATUS FOR FEASIBILITY EVALUATION**

(30) Priority: 18.02.2022 CN 202210152285
(71) Applicant: Huawei Technologies Co., Ltd., Shenzhen, Guangdong 518129 (CN)
(72) Inventor: XU, Ruiyue, Shenzhen, Guangdong 518129 (CN)
(74) Representative: Pfenning, Meinig & Partner mbB
(86) International application number: PCT/CN2023/075026
(87) International publication number: WO 2023/155720

(57) **Abstract**

Embodiments of this application provide a feasibility evaluation method and an apparatus. In the method, when a control device sends, to an execution device, first information for requesting the execution device to perform feasibility evaluation on first network requirement information, at least one of the following information is introduced: reservation requirement information of a network resource corresponding to the first network requirement information, information feedback requirement information about the network resource corresponding to the first network requirement information, and feedback requirement information of a modification recommendation of the first network requirement information. Based on the foregoing method, when performing feasibility evaluation on service quality, carriers may reserve a required network resource for a service, feed back the network resource required by the service, provide a change recommendation for the service, and the like, to effectively expand application scenarios of feasibility evaluation, further improve a service provisioning success rate, and reduce service deployment time.

## Description

This application claims priority to Chinese Patent Application No. 202210152285.5, filed with the China National Intellectual Property Administration on February 18, 2022 and entitled " FEASIBILITY EVALUATION METHOD AND APPARATUS", which is incorporated herein by reference in its entirety.

### TECHNICAL FIELD

Embodiments of this application relate to the field of communication technologies, and more specifically, to a feasibility evaluation method and an apparatus.

### BACKGROUND

A 5th generation mobile communication (5th generation mobile networks, 5G) technology has a more flexible network architecture compared with a previous-generation communication technology. In addition, the 5th generation mobile communication technology raises higher requirements on key performance indicators such as coverage, a capacity, a rate, and mobility of a network. This further increases difficulties in network O&M. Therefore, the communication field introduces an automation technology, in expectation of resolving problems of complexity and low efficiency in a network resource deployment process.

In an actual application process, network planning also needs to be considered when network resources are deployed, and this increases complexity of network deployment. To reduce service deployment time and improve a service provisioning success rate, feasibility evaluation needs to be performed on network requirements in advance. In this case, how to meet requirements of services such as reserving a corresponding network resource while performing feasibility evaluation on the network requirements by carriers, feeding back information about the network resource, and feeding back information about a modification recommendation of the network requirements becomes a problem to be urgently resolved in this field.

### SUMMARY

Embodiments of this application provide a feasibility evaluation method and an apparatus, so that carriers can obtain, when performing feasibility evaluation on network requirement information, a reservation status of a network resource corresponding to the network requirement information, information about the network resource corresponding to the network requirement information, information about a modification recommendation of the network requirement information, and the like, to expand application scenarios of feasibility evaluation, further reduce service deployment time, and improve a service provisioning success rate.

According to a first aspect, a feasibility evaluation method is provided. The method includes: An execution device receives first information sent by a control device, where the first information is for requesting the execution device to perform feasibility evaluation on first network requirement information, the first information includes the first network requirement information, and the first information includes at least one of first indication information, second indication information, or third indication information, where the first indication information indicates the execution device to reserve a network resource corresponding to the first network requirement information, the second indication information indicates the execution device to feed back information about the network resource corresponding to the first network requirement information, and the third indication information indicates the execution device to feed back information about a modification recommendation of the first network requirement; the execution device performs feasibility evaluation on the first network requirement information based on the first information, to determine second information, where the second information includes a feasibility evaluation result, and when the first information includes a first indication, the second information includes a reservation status of the network resource corresponding to the first network requirement information, or when the first information includes the second indication information, the second information includes the information about the network resource corresponding to the first network requirement information, or when the first information includes the third indication information, the second information includes the information about the modification recommendation of the first network requirement information; and the execution device sends the second information to the control device.

Therefore, in this application, when performing feasibility evaluation on the first network requirement information based on the first information to obtain the feasibility evaluation result, the execution device may obtain the reservation status of the network resource of the first network requirement information, the information about the network resource corresponding to the first network requirement information, and the modification recommendation of the first network requirement information. This effectively expands application scenarios of the feasibility evaluation, and further improves a service provisioning success rate while reducing service deployment time.

With reference to the first aspect, in some implementations of the first aspect, when the first information includes the first indication information, the method further includes: The execution device determines a first network resource as the network resource corresponding to the first network requirement information; and the execution device sets the reservation status of the first network resource to reserved, where information about the reservation status of the network resource includes reserved, unreserved, or released.

Therefore, in this application, when the first information includes the first indication information, the execution device determines, based on the first information, the network resource corresponding to the first network requirement information, reserves the network resource, and determines that the reservation status of the network resource corresponding to the first network requirement information is reserved, so that a carrier reserves a corresponding network resource when performing feasibility evaluation on network requirement information, to ensure that there are abundant available network resources when a service deployment request is subsequently delivered. In this way, a success rate of service deployment is improved.

With reference to the first aspect, in some implementations of the first aspect, third information indicates the execution device to release, when a network resource reserved for the first network requirement information is occupied, the network resource and reserve the network resource for the first network requirement information.

Therefore, in this application, when the execution device determines that the network resource corresponding to the first network requirement information is occupied by another piece of network requirement information, the execution device may release a network resource corresponding to the another piece of network requirement information and reserve the network resource for the first network requirement information, so that the carrier ensures that a corresponding network resource is reserved for an important service while performing feasibility evaluation on a service, and fully allocates the network resource based on different service requirements, to ensure proper resource utilization.

With reference to the first aspect, in some implementations of the first aspect, the first indication information further includes the third information.

With reference to the first aspect, in some implementations of the first aspect, the first indication information may further indicate first duration, and the first duration is duration in which the network resource is reserved for the first network requirement information.

With reference to the first aspect, in some implementations of the first aspect, when duration in which the network resource is reserved for the first network requirement information exceeds the first duration, the method further includes: The execution device releases the network resource reserved for the first network requirement information.

With reference to the first aspect, in some implementations of the first aspect, the method further includes: The execution device sends fourth information to the control device, where the fourth information indicates that the reservation status of the network resource reserved for the first network requirement information is updated to released.

Therefore, in this application, when the first indication information further indicates that the duration in which the network resource is reserved for the first network requirement information exceeds a specified duration, the execution device releases the network resource reserved for the first network requirement information, and determines that the reservation status is unreserved or released, so that the network resource can be allocated to the another piece of network requirement information in a state in which the reservation duration is exceeded, to ensure proper allocation of the network resource.

With reference to the first aspect, in some implementations of the first aspect, when the first information includes the second indication information, that the execution device performs feasibility evaluation on the first network requirement information to determine second information includes: The execution device determines the information about the network resource corresponding to the first network requirement information, where the information about the network resource includes a network resource type of the first network requirement information and a network resource quantity of the first network requirement information.

Therefore, in this application, when the first information includes the second indication information, the execution device may determine, based on the first information, the information about the network resource of the first network requirement information, so that the carrier obtains information about the corresponding network resource while performing feasibility evaluation on the network requirement information. This further guides to determine pricing of different service requirements and review network resource information, and ensures proper use of the network resource.

With reference to the first aspect, in some implementations of the first aspect, the method further includes: The execution device receives allocation request information of the network resource sent by the control device, where the allocation request information of the network resource includes the information about the network resource corresponding to the first network requirement information; and the execution device allocates the network resource corresponding to the first network requirement information to the first network requirement information.

Therefore, in this application, the execution device may allocate the corresponding network resource to the first network requirement information based on the allocation request information that is of the network resource and that is sent by the control device. This effectively reduces the service deployment time.

With reference to the first aspect, in some implementations of the first aspect, when the first information includes the third indication information, that the execution device performs feasibility evaluation on the first network requirement information to determine second information includes: The execution device determines the information about the modification recommendation corresponding to the first network requirement information, where the information about the modification recommendation includes a parameter name of at least one recommended piece of network requirement information and a parameter value of the at least one piece of recommended network requirement information.

Therefore, in this application, when the first information includes the third indication information, the execution device may determine, based on the first information, the information about the modification recommendation corresponding to the first network requirement information, so that the carrier obtains information about a corresponding modification recommendation while performing feasibility evaluation on the network requirement information, to guide the carrier to select proper network requirement information based on a current network resource.

With reference to the first aspect, in some implementations of the first aspect, the network resource includes at least one of the following resources: a radio resource, a core network resource, and a virtual resource. The radio resource includes a physical resource block PRB resource, a radio resource control RRC connection quantity, a data radio bearer DRB resource, and the like. The core network resource includes a protocol data unit PDU session establishment connection quantity. The virtual resource includes a virtual machine, a computing resource, a storage resource, a memory, and the like.

According to a second aspect, a feasibility evaluation method is provided. The method includes: A control device sends first information to an execution device, where the first information is for requesting the execution device to perform feasibility evaluation on first network requirement information, the first information includes the first network requirement information, and the first information includes at least one of first indication information, second indication information, or third indication information, where the first indication information indicates the execution device to reserve a network resource corresponding to the first network requirement information, the second indication information indicates the execution device to feed back information about the network resource corresponding to the first network requirement information, and the third indication information indicates the execution device to feed back information about a modification recommendation of the first network requirement; and the control device receives second information sent by the execution device, where the second information includes a feasibility evaluation result, and when the first information includes the first indication information, the second information includes a reservation status of the network resource corresponding to the first network requirement information, or when the first information includes the second indication information, the second information includes the information about the network resource corresponding to the first network requirement information, or when the first information includes the third indication information, the second information includes the information about the modification recommendation of the first network requirement information.

Therefore, in this application, when the control device sends the feasibility evaluation to the execution device, at least one of the first indication information, the second indication information, or the third indication information is introduced. The first indication information indicates the execution device to reserve the network resource corresponding to the first network requirement information, the second indication information indicates the execution device to feed back the information about the network resource corresponding to the first network requirement information, and the third indication information indicates the execution device to feed back the information about the modification recommendation of the first network requirement. This can effectively expand application scenarios of the feasibility evaluation, and further improve a service provisioning success rate while reducing service deployment time.

With reference to the second aspect, in some implementations of the second aspect, when the first information includes the first indication information, the method further includes: The control device receives a reservation status of a first network resource sent by the execution device, where the first network resource is the network resource corresponding to the first network requirement information, and the reservation status includes reserved, unreserved, or released.

Therefore, in this application, when the first information includes the first indication information, the control device may obtain that the reservation status of the network resource corresponding to the first network resource information sent by the execution device is reserved, so that a carrier reserves a corresponding network resource when performing feasibility evaluation on network requirement information, to ensure that there are abundant available network resources when a service deployment request is subsequently delivered. In this way, a success rate of service deployment is improved.

With reference to the second aspect, in some implementations of the second aspect, the method further includes: The control device sends third information to the execution device, where the third information indicates the execution device to release, when a network resource reserved for the first network requirement information is occupied, the network resource and reserve the network resource for the first network requirement information.

Therefore, in this application, when the execution device determines that the network resource corresponding to the first network requirement information is occupied and used by another piece of network requirement information, the control device may send the network requirement information to the execution device, where the first network requirement information may indicate the execution device to release a network resource corresponding to the another piece of network requirement information and reserve the network resource for the first network requirement information, so that the carrier ensures that a corresponding network resource is reserved for an important service while performing feasibility evaluation on a network requirement, and fully allocates the network resource based on different service requirements, to ensure proper resource utilization.

With reference to the second aspect, in some implementations of the second aspect, the first indication information further includes the third information.

With reference to the second aspect, in some implementations of the second aspect, the first indication information may further indicate first duration, and the first duration is duration in which the network resource is reserved for the first network requirement information.

With reference to the second aspect, in some implementations of the second aspect, when duration in which the network resource is reserved for the first network requirement information exceeds the first duration, the method further includes: The control device receives fourth information sent by the execution device, where the fourth information indicates that the reservation status of the network resource reserved for the first network requirement information is updated to released.

Therefore, in this application, when the first indication information further indicates that the duration in which the network resource is reserved for the first network requirement information exceeds a specified duration, the control device may receive that the reservation status determined by the execution device is unreserved or released, so that the network resource can be allocated to the another piece of network requirement information in a state in which the reservation duration is exceeded, to ensure proper allocation of the network resource.

With reference to the second aspect, in some implementations of the second aspect, when the first information includes the second indication information, the method further includes: The control device receives the information about the network resource corresponding to the first network requirement information that is sent by the execution device, where the information about the network resource includes a network resource type of the first network requirement information and a network resource quantity of the first network requirement information.

Therefore, in this application, when the first information includes the second indication information, the control device may obtain the information about the network resource of the first network requirement information that is sent by the execution device, so that the carrier obtains information about the corresponding network resource while performing feasibility evaluation on the network requirement information. This further guides to determine pricing of different service requirements.

With reference to the second aspect, in some implementations of the second aspect, the method further includes: The control device sends allocation request information of the network resource to the execution device, where the allocation request information of the network resource includes the information about the network resource corresponding to the first network requirement information.

Therefore, in this application, the control device may send the allocation request information of the network resource to the execution device, and the execution device allocates the corresponding network resource to the first network requirement information based on the information about the network resource corresponding to the first network requirement information in the allocation request information of the network resource. In this way, the service deployment time is effectively reduced.

With reference to the second aspect, in some implementations of the second aspect, when the first information includes the third indication information, the method further includes: The control device receives the information about the modification recommendation corresponding to the first network requirement information sent by the execution device, where the information about the modification recommendation includes a parameter name of at least one piece of network requirement information and a parameter value of the at least one piece of network requirement information.

Therefore, in this application, when the first information includes the third indication information, the control device may obtain the information about the modification recommendation corresponding to the first network requirement information sent by the execution device, so that the carrier obtains information about a corresponding modification recommendation when performing feasibility evaluation on the network requirement information, to guide the carrier to select proper network requirement information based on a current network resource.

According to a third aspect, a feasibility evaluation method is provided. The method includes: A control device sends first information to an execution device, where the first information is for requesting the execution device to perform feasibility evaluation on first network requirement information, the first information includes the first network requirement information, and the first information includes at least one of first indication information, second indication information, or third indication information, where the first indication information indicates the execution device to reserve a network resource corresponding to the first network requirement information, the second indication information indicates the execution device to feed back information about the network resource corresponding to the first network requirement information, and the third indication information indicates the execution device to feed back information about a modification recommendation of the first network requirement; the execution device performs feasibility evaluation on the first network requirement information based on the first information, to determine second information, where the second information includes a feasibility evaluation result, and when the first information includes the first indication information, the second information includes a reservation status of the network resource corresponding to the first network requirement information, or when the first information includes the second indication information, the second information includes the information about the network resource corresponding to the first network requirement information, or when the first information includes the third indication information, the second information includes the information about the modification recommendation of the first network requirement information; and the execution device sends the second information to the control device.

Therefore, in this application, the control device sends the first information to the execution device, and when performing feasibility evaluation on the first network requirement information based on the first information to obtain the feasibility evaluation result, the execution device may obtain the reservation status of the network resource of the first network requirement information, the information about the network resource corresponding to the first network requirement information, and the information about the modification recommendation of the first network requirement information. This effectively expands application scenarios of the feasibility evaluation, and further improves a service provisioning success rate while reducing service deployment time.

With reference to the third aspect, in some implementations of the third aspect, when the first information includes the first indication information, the method further includes: The execution device determines a first network resource as the network resource corresponding to the first network requirement information; the execution device sets the reservation status of the first network resource to reserved, where the reservation status includes reserved, unreserved, or released; and the execution device sends the reservation status of the first network resource to the control device.

Therefore, in this application, when the first information includes the first indication information, the execution device determines, based on the first information, the network resource corresponding to the first network requirement information, reserves the network resource, determines that the reservation status of the network resource corresponding to the first network requirement information is reserved, and feeds back the network resource to the control device, so that a carrier reserves a corresponding network resource when performing feasibility evaluation on network requirement information, to ensure that there are abundant available network resources when a service deployment request is subsequently delivered. In this way, a success rate of service deployment is improved.

With reference to the third aspect, in some implementations of the third aspect, when the first information includes the second indication information, the method further includes: The execution device determines the information about the network resource corresponding to the first network requirement information, where the information about the network resource includes a network resource type of the first network requirement information and a network resource quantity of the first network requirement information; and the execution device sends the information about the network resource to the control device.

Therefore, in this application, when the first information includes the second indication information, the execution device may determine, based on the first information, the information about the network resource of the first network requirement information, and feed back the information to the control device, so that the carrier obtains information about the corresponding network resource while performing feasibility evaluation on the network requirement information. This further guides to determine pricing of different service requirements and review network resource information, and ensures proper use of the network resource.

With reference to the third aspect, in some implementations of the third aspect, when the first information includes the third indication information, the method further includes: The execution device determines the information about the modification recommendation corresponding to the first network requirement information, where the information about the modification recommendation includes a parameter name of at least one recommended piece of network requirement information and a parameter value of the at least one recommended piece of network requirement information; and the execution device sends the information about the modification recommendation to the control device.

Therefore, in this application, when the first information includes the third indication information, the execution device may determine, based on the first information, the information about the modification recommendation corresponding to the first network requirement information, and feed back the information to the control device, so that the carrier obtains information about a corresponding modification recommendation while performing feasibility evaluation on the network requirement information, to guide the carrier to select proper network requirement information based on a current network resource.

According to a fourth aspect, a communication apparatus is provided, and includes devices configured to implement the method in any possible implementation of the first aspect or the second aspect.

According to a fifth aspect, a feasibility evaluation system is provided. The system includes an apparatus configured to implement the method in any possible implementation of the first aspect or the second aspect.

According to a sixth aspect, a computer-readable storage medium is provided. The computer-readable storage medium stores a computer program (which may also be referred to as code or instructions), and when the computer program is run on a computer, the computer is enabled to perform the method in any possible implementation of the first aspect or the second aspect.

According to a seventh aspect, a chip system is provided, including a memory and a processor. The memory is configured to store a computer program. The processor is configured to store the computer program. The processor is configured to invoke the computer program from the memory and run the computer program, so that a communication device in which the chip system is installed performs the method in any possible implementation of the first aspect or the second aspect. The chip system may include an input chip or an interface configured to send information or data, and an output chip or an interface configured to receive information or data.

### BRIEF DESCRIPTION OF DRAWINGS

FIG. 1 is a diagram of an architecture of an example of a network O&M system according to an embodiment of this application;
FIG. 2 is a schematic block diagram of an example of a communication system 200 according to an embodiment of this application;
FIG. 3 is a schematic flowchart of an example of a feasibility evaluation method according to an embodiment of this application;
FIG. 4 is a schematic flowchart of another example of a feasibility evaluation method according to an embodiment of this application;
FIG. 5 is a schematic flowchart of another example of a feasibility evaluation method according to an embodiment of this application;
FIG. 6 is a schematic flowchart of another example of a feasibility evaluation method according to an embodiment of this application;
FIG. 7 is a schematic block diagram of an example of a communication device according to an embodiment of this application; and
FIG. 8 is a schematic block diagram of another example of a communication device according to an embodiment of this application.

### DESCRIPTION OF EMBODIMENTS

The following describes technical solutions of embodiments in this application with reference to the accompanying drawings.

The technical solutions in embodiments of this application may be applied to various communication systems, for example, a non-standalone (Non-Standalone, NSA) dual-anchor communication system. In an NSA networking mode, a user terminal in a connected state may simultaneously use radio resources of at least two different base stations. A 4G base station serves as a primary station, is an anchor for the user terminal to access a network, and provides a signaling control function for the user terminal to access the network, and can forward user plane data. A 5G base station serves as a secondary station and provides additional user-plane data forwarding resources for the user terminal. An NSA system includes two types of networks. A first network shares a control plane with a second network, and a user plane of the first network is independent of a user plane of the second network. The first network may be a 4th generation (4th generation, 4G) mobile communication system, for example, a long term evolution (long term evolution, LTE) system or a worldwide interoperability for microwave access (worldwide interoperability for microwave access, WiMAX) communication system, or may be a 5th generation (5th generation, 5G) mobile communication system, for example, a new radio (new radio, NR) system, or may be a future communication system, for example, a 6th generation (6th generation, 6G) mobile communication system. This is not limited. The second network may be a 4G mobile communication system such as an LTE system or a WiMAX communication system, or may be a 5G mobile communication system such as an NR system, or may be a future communication system such as a 6G mobile communication system. This is not limited.

With development of communication technologies, a carrier network has developed to a 5th generation mobile communication technology, and a network structure of the carrier network is more flexible than that of a previous generation. For example, a core network is service-oriented, a central unit (central unit, CU) and a distributed unit (distributed unit, DU) of a radio access network (radio access network, RAN) are separated, and a network slice is flexibly customized. Therefore, in the 5th generation mobile communication technology, requirements for key performance indicators such as coverage, a capacity, a rate, and mobility of a network are continuously increasing, and further increases network O&M difficulty.

Currently, the application of an automation technology in the mobile communication network has become the focus and research hotspot in the industry. The communication field introduces the automation technology, such as artificial intelligence, machine learning, and big data analysis, in expectation of resolving the problems of complexity and low efficiency in network O&M (including network planning, network deployment, network maintenance, network optimization, and the like). During the network deployment, the automation technology can be used for automatically converting service requirements into network resource requirements and network configuration parameters, to implement automatic network deployment.

In an actual application process, content of the network planning needs to be considered during the network deployment, and this increases complexity of the network deployment. The 5G network needs to support various industry services. Different industry services have different service quality requirements. To reduce service deployment time and improve a service provisioning success rate, a service level agreement (service level agreement, SLA) of the service needs to be evaluated in advance. Currently, a network planning or deployment intelligent function is introduced into a domain management unit, and a feasibility evaluation interface is provided externally, so that a carrier is allowed to deliver an evaluation task (for example, an SLA requirement of the service) before different network management phases (for example, resource survey and service provisioning), and obtain a corresponding evaluation result (for example, feasible or infeasible). In this solution, feasibility evaluation can be performed on the SLA requirement of the service in advance, so that the service provisioning success rate is improved, and the service deployment time is reduced. However, a disadvantage of this technology is that application scenarios are limited, and it is difficult to meet a current requirement of the carrier for obtaining a reservation status of a network resource of a corresponding service, network resource information corresponding to different service requirements, service requirement recommendation information, and the like when evaluating the service. Therefore, this application provides a feasibility evaluation method, to enhance application scenarios of the feasibility evaluation, further reduce the service deployment time, and improve the service provisioning success rate.

For ease of understanding the technical solutions in embodiments of this application, the following first briefly describes some terms or concepts that may be used in embodiments of this application.

Feasibility evaluation: also referred to as resource pre-evaluation, can provide a capability of evaluating whether a current resource satisfies a specified service requirement, so that a pre-evaluation result of the resource is obtained by invoking a feasibility evaluation interface.

Intent: The intent describes an expectation for a telecommunication system (including a network and management system), including one or more of the following: a requirement, an intent objective, and a restriction. The telecommunication system formulates a solution based on the expectation. It should be understood that the intent may be an intent object, in other words, a managed object of the intent. For example, a capacity intent means that a proportion of high-load cells in an area 1 is 10%; a coverage intent means that a proportion of weak coverage in the area 1 is 20%; and a rate intent means that a proportion of low-rate users in the area 1 is 5%.

Managed object: The managed object is used for describing information about a managed object or management task in the management system. A managed object information model may be used as an interaction parameter in a management interface. Creating the managed object indicates creating management information in the management system, and enabling the management system to manage the managed object or execute the management task based on the management information.

Network resource: The network resource includes at least one of the following: a radio resource, a core network resource, and a virtual resource. The radio resource includes a physical resource block (physical resource block, PRB), a radio resource control (radio resource control, RRC) connection quantity, a data radio bearer (data radio bearer, DRB) resource, and the like. The core network resource mainly includes a packet data unit (packet data unit, PDU) session establishment connection quantity. The virtual resource includes a virtual machine, a computing resource, a storage resource, a memory, and the like.

It should be understood that a specific structure of an execution body of the method provided in embodiments of this application is not particularly limited in the following embodiments, provided that the execution body can run a program that records code of the method provided in embodiments of this application.

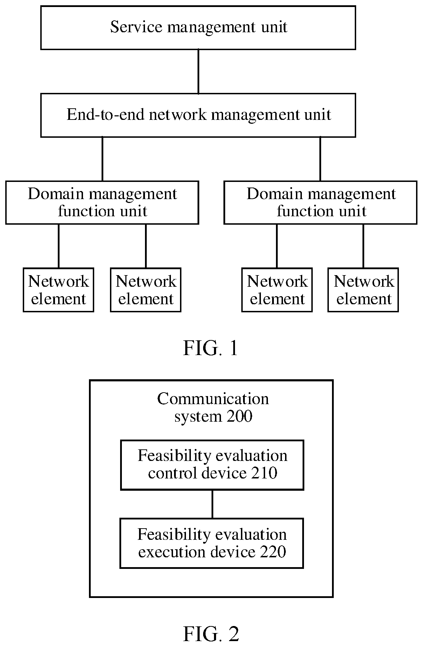

To facilitate understanding of embodiments of this application, FIG. 1 is a diagram of an architecture of a network O&M system according to an embodiment of this application. The architecture of the network O&M system includes a service management unit, an end-to-end network management unit, a domain management unit, and a network element. It should be understood that in some implementations, the service management unit may be referred to as a business support system or a service management system. This is not limited in embodiments of this application. It should be further understood that the end-to-end network management unit may be a node such as a network management system (network management system, NMS), a management service producer (management service producer, MnS Producer), or a management service consumer (management service consumer, MnS Consumer), and the domain management function unit may be a node such as an element management system (element management system, EMS), a wireless automation engine (MBB automation engine, MAE), an MnS producer, or an MnS consumer.

If a management service is a management service provided by the end-to-end network management unit, the end-to-end network management unit is the management service producer, and the service management unit is the management service consumer.

In an implementation, a feasibility evaluation execution device in embodiments of this application is implemented by the end-to-end network management unit, and a feasibility evaluation control device is implemented by the service management unit.

If the management service is a management service provided by the domain management unit, the domain management unit is the management service producer, and the end-to-end network management unit is the management service consumer.

In an implementation, the feasibility evaluation execution device in embodiments of this application is implemented by the domain management unit, and the feasibility evaluation control device is implemented by the end-to-end network management unit.

When the management service is a management service provided by the network element, the network element is the management service producer, and the end-to-end network management unit is the management service consumer.

In an implementation, the feasibility evaluation execution device in embodiments of this application is implemented by the network element, and the feasibility evaluation control device is implemented by the end-to-end network management unit.

The service management unit may be configured to provide service operation functions, for example, functions such as service provisioning, service assurance, service scheduling, and user management. The service management unit may include a service operating system of a vertical industry or a service operating system of a carrier. The service operating system of the carrier may be a business support system or a communication service management system.

The end-to-end network management unit may provide an end-to-end network O&M function. The end-to-end network management function unit may also be referred to as a cross-domain management function unit or a network management function unit (network management function, NMF), for example, a network management entity such as the network management system (network management system, NMS) or a network function management service consumer (network function management service consumer, NFMS_C). The end-to-end network management unit may also provide one or more of the following management functions or management services: network life cycle management, network deployment, network fault management, network performance management, network configuration management, network assurance, network optimization function, translation of a network intent of a service producer (intent from communication service provider, Intent-CSP), translation of a network intent of a communication service user (intent from communication service consumer, intent-CSC), training of a network artificial intelligence (Artificial Intelligence, AI) model, inference of a network AI model, and the like.

It should be understood that a network indicated by the management function or the management service in the end-to-end network management unit may include one or more network elements or subnets, or may be a network slice. In other words, the network management function unit may be a network slice management function (network slice management function, NSMF) unit, a cross-domain management data analytics function (management data analytical function, MDAF) unit, a cross-domain self-organization network function (self-organization network function, SONF) unit, or a cross-domain intent management function (intent driven management function, MnF) unit.

It should be further understood that, in an implementation, the end-to-end network management unit may further provide functions of subnet life cycle management, subnet deployment, subnet fault management, subnet performance management, subnet configuration management, subnet assurance, subnet optimization and intelligent analysis, translation of a network intent of a service producer of the subnet (Intent-CSP) or a network intent of a communication service user of the subnet (intent from a communication service consumer, Intent-CSC), and the like. The subnet herein includes a plurality of small subnets, and may be a network slice subnet. For example, an access network subnet of the carrier includes an access network subnet of a vendor 1 and an access network subnet of a vendor 2.

The domain management unit is also referred to as a domain management function unit, or may be referred to as a subnet management function unit (network management function, NMF) or a network element management function unit. For example, the domain management function unit may be an element management entity such as a wireless automation engine (MBB automation engine, MAE), an element management system (element management system, EMS), or a network function management service provider (network function management service provider, NFMS_P).

It should be understood that the domain management unit may provide a subnet O&M function and a network element O&M function in a specific field, and specific functions include a lifecycle management function of a subnet or a network element, a configuration management function, a fault management function, a performance management function, an intent management function, an intelligent analysis function, intent translation of the subnet or the network element, training of a network AI model, inference of a network AI model, and the like. The subnet may include one or more network elements, or the subnet may include a subnet. That is, one or more subnets form a larger subnet.

It should be further understood that the specific field provided by the domain management unit may be a technology domain, to be specific, a radio access domain, a core domain, a transmission domain, or the like. Therefore, the architecture of the network O&M system includes a radio access domain management system, a core domain management system, and a transmission domain management system. The specific field may alternatively be a vendor domain. That is, each vendor corresponds to one domain, for example, a vendor 1 domain or a vendor 2 domain.

In an implementation, the foregoing specific field may alternatively be a combination of the vendor domain and the technology domain, that is, a radio access domain of a vendor 1, a radio access domain of a vendor 2, or the like.

In an implementation, the subnet may further be described in the following several manners:
a standard network, for example, a global system for mobile communications (Global System for Mobile Communications, GSM) network, an LTE network, or a 5G network;
a network provided by an equipment vendor, for example, a network provided by an equipment vendor A; and
a network of a geographical area, for example, a network of a factory A, and a network of a prefecture-level city B.

Optionally, the subnet in the domain management unit may alternatively be a network slice subnet. The domain management unit may alternatively be a network slice subnet management function (network slice subnet management function, NSSMF) unit, a domain management data analytics function (management data analytical function, Domain MDAF) unit, a domain self-organization network function (self-organization network function, SON Function) unit, a domain intent management function unit Intent Driven MnS, or the like.

In an implementation, the domain management unit may be divided based on a network type and an administrative region.

By network types, the domain management unit may be classified into the following types: an access network domain management function unit (radio access network domain management function, RAN-Domain-MnF), a core network domain management function unit (core network domain management function, CN-Domain-MnF), a transport network domain management function unit (transport network domain management function, TN-Domain-MnF), and the like. It should be noted that the domain management function unit may alternatively be a domain network management system, and may be one or more of a management access network, a core network, or a transmission network.

By network types, the domain management unit may be classified as follows: domain management function units of geographical areas, for example, a Shenzhen domain management function unit and a Shanghai domain management function unit.

The network element is an entity that provides a network service, including a core network element, an access network element, and the like. The core network element includes an access and mobility management function (access and mobility management function, AMF), a session management function (session management function, SMF), a policy control function (policy control function, PCF), a network data analytics unit (network data analytical function, NWDAF), a network repository unit (NF Repository Function, NRF), a gateway, and the like. The access network element includes a base station (for example, a gNB or an eNB), a base station central control unit (gNB central unit control plane, gNBCUCP), a base station central unit (gNB central unit, gNBCU), a base station distributed unit (gNB distributed unit, gNBDU), a base station central user plane unit (gNB central unit user plane, gNBCUUP), and the like.

In an implementation, the network element may provide one or more of the following management functions or management services: network element life cycle management, network element deployment, network element fault management, network element performance management, network element assurance, network element optimization function, translation of a network element intent, and the like.

FIG. 2 is a schematic block diagram of an example of a communication system 200 according to an embodiment of this application. The communication system 200 includes a feasibility evaluation control device 210 and a feasibility evaluation execution device 220. The feasibility evaluation control device 210 is connected to the feasibility evaluation execution device 220 through a logical interface.

In an implementation, the feasibility evaluation control device 210 sends first information to the feasibility evaluation execution device 220, where the first information is for requesting to perform feasibility evaluation on first network requirement information, and the first information includes the first network requirement information and at least one of the following information: reservation requirement information of a network resource of the first network requirement information, information feedback requirement information about the network resource corresponding to the first network requirement information, and feedback requirement information of a modification recommendation of the first network requirement information.

Specifically, the first network requirement information may be referred to as service requirement information or an intent objective, for example, a network latency, a network rate, a coverage area, a user type, a maximum quantity of users, a user quantity activation ratio, coverage quality (for example, a weak coverage proportion), a service type (for example, ultra-reliable low-latency communication (ultra-reliable low-latency communication, uRLLC), enhanced mobile broadband (enhanced mobile broadband, eMBB), Internet of Things (Internet of things, mIoT), and a vehicle wireless communication technology (vehicle to everything, V2X)), a packet transmission size, terminal distribution information, and a terminal mobility status.

In an implementation, the feasibility evaluation execution device 220 performs feasibility evaluation on the first network requirement information, to determine second information. The second information includes a feasibility evaluation result and at least one of the following information: a reservation status of the network resource of the first network requirement information, the information about the network resource corresponding to the first network requirement information, and information about the modification recommendation of the first network requirement information.

In an implementation, the feasibility evaluation execution device 220 sends the second information to the feasibility evaluation control device 210.

In an implementation, when the first information includes the reservation requirement information of the network resource of the first network requirement information, and the reservation requirement information of the network resource indicates that the network resource needs to be reserved for the first network requirement information, that the feasibility evaluation execution device 220 performs feasibility evaluation on the first network requirement information based on the first information to determine the second information includes: The feasibility evaluation execution device 220 determines the network resource corresponding to the first network requirement information; the feasibility evaluation execution device 220 reserves the network resource corresponding to the first network requirement information; and the feasibility evaluation execution device 220 determines the reservation status of the network resource corresponding to the first network requirement information, where the reservation status of the network resource includes reserved, unreserved, or released.

In an implementation, when the first information includes the reservation requirement information of the network resource of the first network requirement information, and the reservation requirement information of the network resource indicates that the network resource needs to be reserved for the first network requirement information, the feasibility evaluation execution device 220 sends, to the feasibility evaluation control device 210, information about the reservation status of the network resource corresponding to the first network requirement information.

In an implementation, when the reservation requirement information of the network resource indicates that duration in which the network resource needs to be reserved for the first network requirement information, and reservation time exceeds the duration in which the network resource is reserved for the first network requirement information, the feasibility evaluation execution device 220 releases the network resource corresponding to the first network requirement information; and the feasibility evaluation execution device 220 determines that the reservation status of the network resource corresponding to the first network requirement information is an unreserved state or a released state.

In an implementation, when the reservation requirement information of the network resource indicates that the duration in which the network resource needs to be reserved for the first network requirement information, and the reservation time exceeds the duration in which the network resource is reserved for the first network requirement information, the feasibility evaluation execution device 220 sends, to the feasibility evaluation control device 210, information indicating that the reservation status of the network resource corresponding to the first network requirement information is the unreserved state or the released state.

In an implementation, when the network resource corresponding to the first network requirement information is occupied by another piece of network requirement information, the feasibility evaluation control device 210 sends indication information to the feasibility evaluation execution device 220, where the indication information indicates the feasibility evaluation execution device 220 to release the network resource occupied by the another piece of network requirement information and reserve the network resource for the first network requirement information.

In an implementation, when the first information includes the reservation requirement information of the network resource of the first network requirement information, the feasibility control device 210 sends query information of the reservation status of the network resource to the feasibility execution device 220.

In an implementation, when the first information includes the information feedback requirement information about the network resource corresponding to the first network requirement information, and the information feedback requirement information about the network resource indicates the information about the network resource corresponding to the first network requirement information needs to be fed back, that the feasibility evaluation execution device 220 performs feasibility evaluation on the first network requirement information to determine the second information includes: The feasibility evaluation execution device 220 determines the information about the network resource corresponding to the first network requirement information, where the information about the network resource includes a resource type of the first network requirement information and a resource quantity of the first network requirement information.

In an implementation, when the first information includes the information feedback requirement information about the network resource corresponding to the first network requirement information, and the information feedback requirement information about the network resource indicates that the information about the network resource corresponding to the first network requirement information needs to be fed back, the feasibility execution device 220 sends, to the feasibility control device 210, the information about the network resource corresponding to the first network requirement information.

In an implementation, when the first information includes the information feedback requirement information about the network resource corresponding to the first network requirement information, and the information feedback requirement information about the network resource indicates that the information about the network resource corresponding to the first network requirement information needs to be fed back, the feasibility evaluation control device 210 sends allocation request information of the network resource to the feasibility evaluation execution device 220, where the allocation request information of the network resource includes the information about the network resource corresponding to the first network requirement information.

In an implementation, when the first information includes the information feedback requirement information about the network resource corresponding to the first network requirement information, the feasibility evaluation control device 210 sends query information of the information about the network resource to the feasibility evaluation execution device 220.

In an implementation, when the first information includes the feedback requirement information of the modification information of the first network requirement information, and the feedback requirement information of the modification recommendation of the first network requirement information indicates that information about the modification recommendation corresponding to the first network requirement information needs to be fed back, that the feasibility execution device 220 performs feasibility evaluation on the first network requirement information to determine the second information includes: The feasibility execution device determines the information about the modification recommendation corresponding to the first network requirement information, where the information about the modification recommendation includes a parameter name of at least one piece of recommended network requirement information and a parameter value of the at least one piece of recommended network requirement information.

In an implementation, when the first information includes the feedback requirement information of the modification recommendation of the first network requirement information, and the feedback requirement information of the modification recommendation of the first network requirement information indicates that the modification recommendation corresponding to the first network requirement information needs to be fed back, the feasibility evaluation execution device 220 sends, to the feasibility evaluation control device, the information about the modification recommendation corresponding to the first network requirement information.

In an implementation, when the first information includes the feedback requirement information of the modification recommendation of the first network requirement information, the feasibility evaluation control device 210 sends query information of the modification recommendation to the feasibility evaluation execution device 220.

In an implementation, the feasibility evaluation control device 210 sends deployment request information of the first network requirement information to the feasibility evaluation execution device 220.

In an implementation, the feasibility evaluation execution device 220 deploys the first network requirement information based on the deployment request information of the first network requirement information.

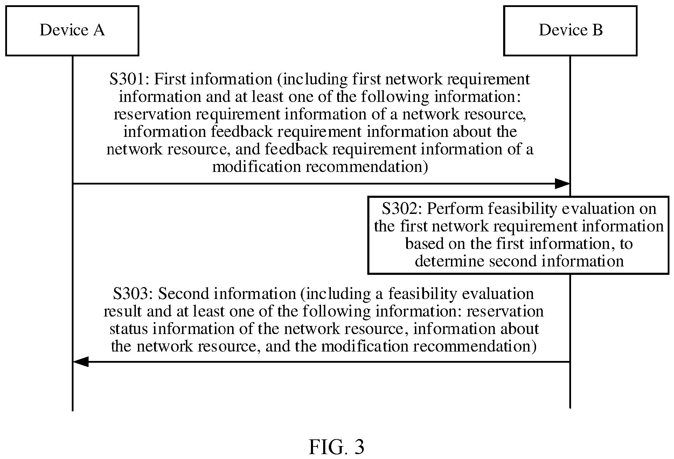

FIG. 3 is a schematic flowchart of an example of a feasibility evaluation method according to an embodiment of this application.

S301: A device A sends first information to a device B.

It should be understood that, in this embodiment of this application, the device A may be a feasibility evaluation control device, and the device B may be a feasibility evaluation execution block. This is used as an example instead of a limitation. This is not limited in this embodiment of this application.

Specifically, the first information is for requesting the device B to perform feasibility evaluation on first network requirement information, and the first information includes the first network requirement information and at least one of the following information:
reservation requirement information of a network resource corresponding to the first network requirement information;
information feedback requirement information about the network resource corresponding to the first network requirement information; and
feedback requirement information of a modification recommendation of the first network requirement information.

S302: The device B determines second information after performing feasibility evaluation on the first network requirement information.

Specifically, the second information includes a feasibility evaluation result and at least one of the following information:
a reservation status of the network resource of the first network requirement information;
the information about the network resource corresponding to the first network requirement information; and
information about the modification recommendation of the first network requirement information.

In an implementation, when the first information includes the reservation requirement information of the network resource of the first network requirement information, and the reservation requirement information of the network resource indicates that the network resource needs to be reserved for the first network requirement information, the device B determines the network resource corresponding to the first network requirement information; the device B reserves the network resource corresponding to the first network requirement information; and the device B determines the reservation status of the network resource corresponding to the first network requirement information, where the reservation status of the network resource includes reserved, unreserved, or released.

In an implementation, when the first information includes the reservation requirement information of the network resource of the first network requirement information, and the reservation requirement information of the network resource may further indicate duration in which the network resource needs to be reserved for the first network requirement information, and when reservation time exceeds the duration in which the network resource is reserved for the first network requirement information, the device B releases the network resource corresponding to the first network requirement information, and the device B determines that the status of the network resource corresponding to the first network requirement information is an unreserved state or a released state.

In an implementation, when the network resource corresponding to the first network requirement information is occupied by another piece of network requirement information, the device A sends indication information to the device B, where the indication information indicates the device B to release the network resource occupied by the another piece of network requirement information and reserve the network resource for the first network requirement information.

In an implementation, when the first information includes the information feedback requirement information about the network resource corresponding to the first network requirement information, and the information feedback requirement information about the network resource indicates that information about the network resource corresponding to the first network requirement information needs to be fed back, that the device B performs feasibility evaluation on the first network requirement information based on the first information to determine second information includes: The device B determines the information about the network resource corresponding to the first network requirement information, where the information about the network resource includes a network resource type of the first network requirement information and a network resource quantity of the first network requirement information.

In an implementation, when the first information includes the information feedback requirement information about the network resource corresponding to the first network requirement information, and the information feedback requirement information about the network resource indicates that the information about the network resource corresponding to the first network requirement information needs to be fed back, that the device B performs feasibility evaluation on the first network requirement information to determine the second information includes: The device B determines, based on the first information, the information about the network resource corresponding to the first network requirement information, where the information about the network resource includes the network resource type of the first network requirement information and the network resource quantity of the first network requirement information.

In an implementation, when the first information includes the feedback requirement information of the modification recommendation of the first network requirement information, and the feedback requirement information of the modification recommendation of the first network requirement information indicates that the information about the modification recommendation corresponding to the first network requirement information needs to be fed back, that the device B performs feasibility evaluation on the first network requirement information based on the first information to determine the second information includes: The device B determines the information about the modification recommendation corresponding to the first network requirement information, where the information about the modification recommendation includes a parameter name of at least one recommended piece of network requirement information and a parameter value of the at least one recommended piece of network requirement information.

S303: The device B sends the second information to the device A.

In an implementation, when the first information includes the reservation requirement information of the network resource of the first network requirement information, and the reservation requirement information of the network resource indicates that the network resource needs to be reserved for the first network requirement information, the method further includes: The device A receives the reservation status that is of the network resource corresponding to the first network requirement information and that is sent by the device B, where the reservation status of the network resource includes reserved, unreserved, or released.

In an implementation, when the first information includes the reservation requirement information of the network resource of the first network requirement information, and the reservation requirement information of the network resource may further indicate duration in which the network resource needs to be reserved for the first network requirement information, and when the reservation time exceeds the duration in which the network resource is reserved for the first network requirement information, the device A receives the reservation status that is of the network resource corresponding to the first network requirement information and that is sent by the device B, where the reservation status of the network resource is the unreserved state or the released state.

In an implementation, when the first information includes the information feedback requirement information about the network resource corresponding to the first network requirement information, and the information feedback requirement information about the network resource indicates that the information about the network resource corresponding to the first network requirement information needs to be fed back, the device A receives the information that is about the network resource corresponding to the first network requirement information and that is sent by the device B, where the information about the network resource includes the network resource type of the first network requirement information and the network resource quantity of the first network requirement information.

In an implementation, when the first information includes the feedback requirement information of the modification recommendation of the first network requirement information, and the feedback requirement information of the modification recommendation of the first network requirement information indicates that the information about the modification recommendation corresponding to the first network requirement information needs to be fed back, the method further includes: The device A receives the information that is about the modification recommendation corresponding to the first network requirement information and that is sent by the device B, where the information about the modification recommendation includes a parameter name of at least one piece of network requirement information and a parameter value of the at least one piece of network requirement information; and the device A determines, with reference to a current status of the network resource and the first network requirement information, whether to receive the information about the modification recommendation corresponding to the first network requirement information, where when the device A obtains information about at least one modification recommendation corresponding to the first network requirement information, the device A determines one piece of information about a modification recommendation from the information about the at least one modification recommendation to deploy the first network requirement information.

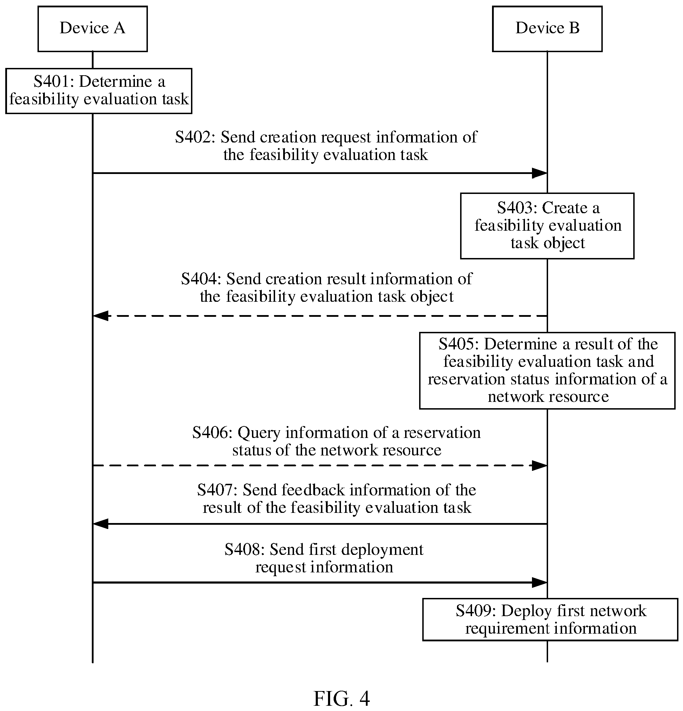

FIG. 4 is a schematic flowchart of another example of a feasibility evaluation method according to an embodiment of this application.

S401: A device A determines a feasibility evaluation task based on first network requirement information.

Optionally, the feasibility evaluation task includes feasibility requirement information.

It should be further understood that the feasibility evaluation requirement information in the feasibility evaluation task may include the following information:
network requirement information, which may also be referred to as service requirement information or an intent objective, and may be, for example, a latency, a rate, a coverage area, a user type, a maximum quantity of users, a user activation ratio, coverage quality (for example, a weak coverage proportion), a service type (for example, uRLLC, eMBB, mIoT, or V2X), a packet transmission size, terminal distribution information, and a terminal mobility status;
reservation requirement information of a network resource, which indicates a feasibility evaluation execution device to reserve the network resource for the first network requirement information after performing feasibility evaluation on the first network requirement information, and feed back a reservation status of the network resource of the first network requirement information;
information feedback requirement information about the network resource, which indicates the feasibility evaluation execution device to feed back information about the network resource corresponding to the first network requirement information after performing feasibility evaluation on the first network requirement information; and
feedback requirement information of a modification recommendation, which indicates the feasibility evaluation execution device to feed back information about the modification recommendation of the first network requirement information after performing feasibility evaluation on the first network requirement information, including:
   when a feasibility evaluation result of the first network requirement information is feasible, feeding back information about a modification recommendation in a case in which the first network requirement information is met in a current network resource; and
   when a feasibility evaluation result of the first network requirement information is infeasible, feeding back information about a modification recommendation that can meet the first network requirement information in a current network resource.

In an implementation, a user triggers the device A to formulate the feasibility evaluation task in the following cases:
In a service requirement negotiation phase, a proper service requirement needs to be determined; and
in a service deployment phase, whether the current network resource meets the service requirement needs to be determined.

Specifically, the feasibility evaluation task includes reservation requirement information of the network resource of the first network requirement information.

In an implementation, a feasibility evaluation control device determines the feasibility evaluation task based on the first network requirement information. The feasibility evaluation task may include the first network requirement information and the reservation requirement information of the network resource of the first network requirement information, and the first network requirement information is a to-be-executed service.

S402: The device A sends creation request information of the feasibility evaluation task to the device B, where the creation request information of the feasibility evaluation task indicates the device B to create a feasibility evaluation task object based on the creation request information of the feasibility evaluation task.

Specifically, the creation request information of the feasibility evaluation task may include an identifier of the feasibility evaluation task, an identifier of the first network requirement information, the first network requirement information, and the reservation requirement information of the network resource of the first network requirement information.

In an implementation, the feasibility evaluation control device sends the creation request information of the feasibility evaluation task to the feasibility evaluation execution device, where the creation request information of the feasibility evaluation task indicates the feasibility evaluation execution device to create the feasibility evaluation task object.

S403: The device B determines the feasibility evaluation task object based on the creation request information of the feasibility evaluation task, and configures, in the feasibility evaluation task object, the first network requirement information and the reservation requirement information of the network resource of the first network requirement information.

In an implementation, the feasibility execution device creates the feasibility evaluation task object based on the creation request information of the feasibility evaluation task, and configures the feasibility evaluation requirement information in the feasibility evaluation task obj ect.

Optionally, in S404, the device B sends creation result information of the feasibility evaluation task object to the device A, where the creation result information of the feasibility evaluation task object includes the identifier of the feasibility evaluation task.

In an implementation, the feasibility evaluation execution device sends the creation result information of the feasibility evaluation task object to the feasibility evaluation control device, where the creation result information of the feasibility evaluation task object feeds back a result of creating the feasibility evaluation task object by the feasibility evaluation execution device to the feasibility evaluation control device.

S405: The device B determines a result of the feasibility evaluation task and the reservation status of the network resource based on the creation result information of the feasibility evaluation task object.

In an implementation, the feasibility evaluation execution device determines the result of the feasibility evaluation task based on the feasibility evaluation requirement information.

Optionally, the feasibility evaluation execution device executes a feasibility evaluation procedure based on the feasibility evaluation task object. The feasibility evaluation procedure includes: performing simulation calculation on a requirement of a network resource that meets a service requirement, and determining, based on the requirement of the network resource, whether there are abundant available network resources, to determine the network resource that meets the service requirement, and obtain the result of the feasibility evaluation task.

It should be noted that, during the simulation calculation, existing network requirement information (including reserved and allocated), full resource information, a path loss, an engineering parameter, and terminal information need to be summarized for simulation calculation. This is not limited in this application.

By way of example rather than limitation, radio resource simulation may include delay simulation, bandwidth simulation, and the like, and is used for calculating uplink and downlink reference signal received power (Reference signal received power, RSRP) and a signal to interference plus noise ratio (Signal to interference plus noise ratio, SINR), to obtain a resource reservation quantity of resource blocks (Resource block, RB) and a rate result.

Specifically, the result of the feasibility evaluation task determined by the feasibility evaluation execution device based on the feasibility evaluation requirement information is feasible or infeasible.

In an implementation, when the reservation requirement information of the network resource indicates that the network resource needs to be reserved for the first network requirement information, the device B may perform the following operations: The device B may determine the network resource corresponding to the first network requirement information; the device B reserves the network resource corresponding to the first network requirement information; and the device B determines the reservation status of the network resource corresponding to the first network requirement information, where the reservation status of the network resource includes reserved, unreserved, or released.

For example, when specified network requirement information is (service type: URLLC; coverage area: Pudong Jinqiao; maximum quantity of users: 400,000; latency: 20 ms; and rate: 400 Mbps), after the feasibility evaluation execution device determines, during evaluation, that there are abundant PRB resources to meet the foregoing service requirements, the feasibility evaluation execution device reserves the PRB resource corresponding to the service requirement information, and determines that a reservation status of the network resource corresponding to the service requirement information is reserved.

In an implementation, when the reservation requirement information of the network resource may further indicate duration in which the network resource needs to be reserved for the first network requirement information, and when reservation time exceeds the duration in which the network resource is reserved for the first network requirement information, the device B may perform the following operations: The device B releases the network resource corresponding to the first network requirement information; and the device B determines that the reservation status of the network resource corresponding to the first network requirement information is an unreserved or a released state.

In an implementation, when the reservation requirement information of the network resource indicates that a network resource corresponding to another piece of network requirement information needs to be preempted for the first network requirement information, and when the device B determines that the network resource corresponding to the first network requirement information is already used by the another piece of network requirement information, the device B may release the network resource corresponding to the another piece of network requirement information and reserve the network resource for the first network requirement information.

Optionally, the feasibility evaluation execution device further allocates a reserved resource identifier to the network resource corresponding to the first network requirement information, and associates the reserved resource identifier with the identifier of the network requirement information.

It should be understood that the foregoing steps and S405 may belong to a same step, or may be an independent step after S405. This is not limited in this application.

Optionally, in S406, the device A sends query information of the reservation status of the network resource to the device B, where the query information of the reservation status of the network resource is used for querying the feasibility evaluation result of the first network requirement information and the reservation status of the network resource of the first network requirement information.

In an implementation, the feasibility evaluation control device sends a query request of the reservation status of the network resource to the feasibility evaluation execution device, where the query request of the reservation status of the network resource is used for querying the reservation status of the network resource of the first network requirement information.

S407: The device B sends feedback information of the feasibility evaluation result to the device A, where the feedback information of the feasibility evaluation result includes the identifier of the feasibility evaluation task and the reservation status of the network resource.

In an implementation, the feasibility evaluation execution device sends the feedback information of the feasibility evaluation result to the feasibility evaluation control device, where the feedback information of the feasibility evaluation result indicates the feasibility evaluation result of the first network requirement information and the reservation status of the network resource of the first network requirement information.

In an implementation, when the reservation requirement information of the network resource indicates that the network resource needs to be reserved for the first network requirement information, the device B sends, to the device A, the reservation status of the network resource corresponding to the first network requirement information, where the reservation status of the network resource is reserved, unreserved, or released.

In an implementation, when the reservation requirement information of the network resource may further indicate duration in which the network resource needs to be reserved for the first network requirement information, and when the reservation time exceeds the duration in which the network resource is reserved for the first network requirement information, the device B sends, to the device A, the reservation status of the network resource corresponding to the first network requirement information, where the reservation status of the network resource is the unreserved state or the released state.

S408: The device A sends first deployment request information to the device B, where the first deployment request information indicates to deploy the first network requirement information on a first resource, and the first resource indicates the network resource reserved for the first network requirement information.

In an implementation, the feasibility evaluation control device obtains that the feasibility evaluation result is feasible, and the reservation status of the network resource of the first network requirement information is reserved, so that the feasibility evaluation control device sends the first deployment request information to the feasibility evaluation execution device. The first deployment request information indicates to deploy the first network requirement information on the first resource, and the first resource indicates the network resource reserved for the first network requirement information.

Specifically, the first deployment request information includes the identifier of the first network requirement information and the reservation requirement information of the network resource of the first network requirement information.

S409. The device B deploys the first network requirement information based on the first deployment request information.

In an implementation, the feasibility evaluation execution device deploys the network resource of the first network requirement information based on the identifier of the first network requirement information in the first deployment request and the reservation status information of the network resource of the first network requirement information that are in the first deployment request.

By introducing the reservation requirement information of the network resource of the first network requirement information into the feasibility evaluation task, the feasibility evaluation execution device may be controlled to reserve the corresponding network resource for the first network requirement information; and then, by adding the reservation status of the network resource of the first network requirement information to the feasibility evaluation result, the feasibility evaluation control device obtains the reservation status of the network resource of the first network requirement information, to ensure that a carrier reserves a network resource while performing feasibility evaluation on service quality, and there is an available resource when a service deployment request is subsequently delivered, to improve a success rate of service deployment.

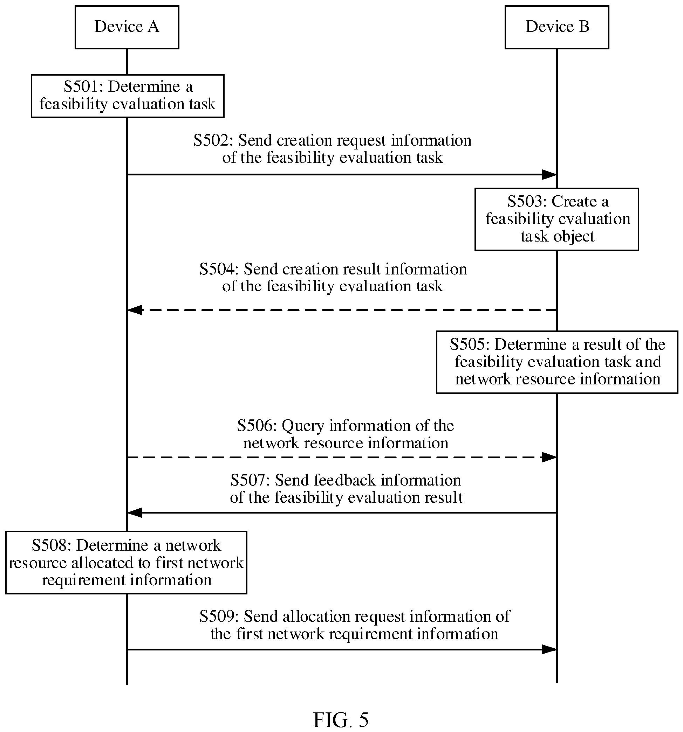

FIG. 5 is a schematic flowchart of another example of a feasibility evaluation method according to an embodiment of this application.

S501: A device A determines a feasibility evaluation task for a network requirement based on first network requirement information.

Specifically, the feasibility evaluation task includes information feedback information of a network resource corresponding to the first network requirement information.

In an implementation, a feasibility evaluation control device determines the feasibility evaluation task based on the first network requirement information, where the feasibility evaluation task may include the information feedback information of the network resource corresponding to the first network requirement information, and the first network requirement information is a to-be-executed service.

S502: The device A sends creation request information of the feasibility evaluation task to a device B, where the creation request information of the feasibility evaluation task indicates the device B to create a feasibility evaluation task object based on the creation request information of the feasibility evaluation task.

Specifically, the creation request information of the feasibility evaluation task may include an identifier of the feasibility evaluation task, an identifier of the first network requirement information, the first network requirement information, and the information feedback information of the network resource corresponding to the first network requirement information.

This step is similar to the method S402. For brevity, details are not described herein again.

S503: The device B determines the feasibility evaluation task object based on the creation request information of the feasibility evaluation task, and configures, in a second feasibility evaluation task, the first network requirement information and the information feedback information of the network resource corresponding to the first network requirement information.

This step is similar to the method S403. For brevity, details are not described herein again.

Optionally, in S504, the device B sends creation result information of the feasibility evaluation task object to the device A, where the creation result information of the feasibility evaluation task object includes the identifier of the feasibility evaluation task.

This step is similar to the method S404. For brevity, details are not described herein again.

S505: The device B determines a result of the feasibility evaluation task and the information about the network resource corresponding to the first network requirement information based on the creation result information of the feasibility evaluation task object.

This step is similar to the method S405. For brevity, details are not described herein again.

In an implementation, when the creation request information of the feasibility evaluation task includes the information feedback information of the network resource corresponding to the first network requirement information, after performing feasibility evaluation, if a feasibility evaluation result is feasible, a feasibility evaluation execution device determines the information about the network resource allocated to the first network requirement information.

In an implementation, when the information feedback requirement information about the network resource indicates that the information about the network resource corresponding to the first network requirement information needs to be fed back, the device B determines the information about the network resource corresponding to the first network requirement information, where the information about the network resource includes a network resource type of the first network requirement information and a resource quantity of the first network requirement information.

For example, when the information about the network resource is a radio resource (including a PRB, an RRC connection quantity, a DRB resource, and the like), the information about the network resource may be represented as a list of cells that serve a service requirement, and a quantity or a proportion of radio resources allocated by each cell to the service requirement, for example, (a cell 1, a PRB: 500, an RRC connection quantity: 1000, and a DRB resource quantity: 600), (a cell 2, a PRB: 500, an RRC connection quantity: 800, and a DRB resource quantity: 300), or (a cell 1, a PRB: 30%, an RRC connection quantity: 20%, and a DRB resource quantity: 20%), (a cell 2, a PRB: 30%, an RRC connection quantity: 15%, and a DRB resource quantity: 15%).

When the information about the network resource is a core network resource (including a quantity of PDU session establishment connections and a quantity of subscription users), the information about the network resource may be represented as an SMF serving the service requirement and a unified management data (Unified data management, UDM) list, a quantity of PDU session connections allocated by each SMF to the service requirement, and a quantity of subscription users allocated by each UDM to the service requirement, for example, (an SMF 1, and a quantity of PDU session establishment connections: 1000) and (a UDM l,and a quantity of subscription users: 500).

When the information about the network resource is a virtual resource, the information about the network resource may be represented as a quantity of virtual machines, a quantity of computing resources, a quantity of storage resources, and a quantity of memories that serve the service requirement.

Optionally, in S506, the device A sends query information of the information about the network resource to the device B, where the query information of the information about the network resource is used for querying the feasibility evaluation result of the first network requirement information and the information about the network resource of the first network requirement information.

This step is similar to the method S406. For brevity, details are not described herein again.

S507: The device B sends feedback information of the feasibility evaluation result to the device A, where the feedback information of the feasibility evaluation result includes the identifier of the feasibility evaluation task and the information about the network resource of the first network requirement information.

This step is similar to the method S407. For brevity, details are not described herein again.

In an implementation, when the feasibility evaluation task includes the information feedback information of the network resource corresponding to the first network requirement information, and the feasibility result is feasible, the feasibility evaluation execution device sends the identifier of the feasibility evaluation task and the information about the network resource of the first network requirement information to the feasibility evaluation control device.

In an implementation, when the information feedback requirement information about the network resource indicates that the information about the network resource corresponding to the first network requirement information needs to be fed back, the device B sends, to the device A, the information about the network resource corresponding to the first network requirement information, where the information about the network resource includes the network resource type of the first network requirement information and the network resource quantity of the first network requirement information.

S508: The device A determines, based on the feedback information of the feasibility evaluation result, the information about the network resource allocated to the first network requirement information.

In an implementation, when the information feedback requirement information about the network resource indicates that the information about the network resource corresponding to the first network requirement information needs to be fed back, and the feasibility evaluation result is feasible, the feasibility evaluation control device determines, based on the information about the network resource of the first network requirement information that is fed back, the network resource allocated to the first network requirement information.

S509: The device A sends allocation request information of the first network requirement information to the device B, where the allocation request information of the first network requirement information indicates to allocate the information about the network resource of the first network requirement information to the first network requirement information.

In an implementation, when the information feedback requirement information about the network resource indicates that the information about the network resource corresponding to the first network requirement information needs to be fed back, and the feasibility evaluation result is feasible, the feasibility evaluation control device sends the allocation request information of the first network requirement information to the feasibility evaluation execution device, where the allocation request information of the first network requirement information indicates to allocate the information about the network resource of the first network requirement information to the first network requirement information.

Specifically, the allocation request information of the first network requirement information includes the identifier of the first network requirement information and the information about the network resource of the first network requirement information.

By introducing the information feedback information of the network resource corresponding to the first network requirement information into the feasibility evaluation task, the feasibility evaluation execution device may be controlled to obtain, through calculation, the information about the network resource of the first network requirement information and feed back the information. In addition, by introducing the information about the network resource into the feasibility evaluation result, the feasibility evaluation control device obtains information about a network resource of a corresponding service requirement, and requests the feasibility evaluation execution device to perform allocation after the information is confirmed by the feasibility control device. Therefore, when performing feasibility evaluation on service quality, a carrier may obtain information about a corresponding network resource, to guide pricing of a service requirement, or configure a network resource for corresponding network requirement information through a network resource configuration interface, so that service deployment time is reduced.

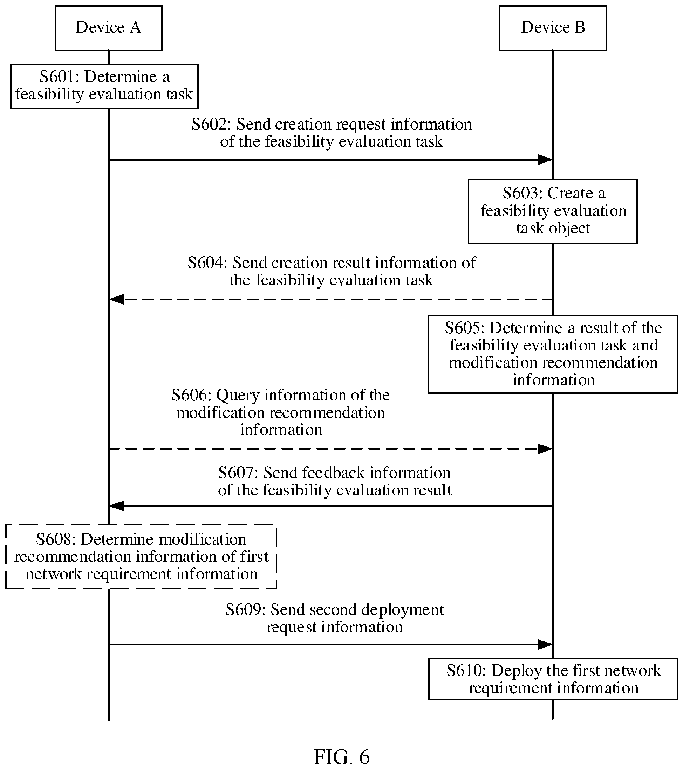

FIG. 6 is a schematic flowchart of another example of a feasibility evaluation method according to an embodiment of this application.

S601: A device A determines a feasibility evaluation task for a network requirement based on first network requirement information.

Specifically, the feasibility evaluation task includes feedback requirement information of a modification recommendation of the first network requirement information.

In an implementation, a feasibility evaluation control device determines the feasibility evaluation task based on the first network requirement information, where the feasibility evaluation task may include the feedback requirement information of the modification recommendation of the first network requirement information, and the first network requirement information is a to-be-executed service.

S602: The device A sends creation request information of the feasibility evaluation task to a device B, where the creation request information of the feasibility evaluation task indicates the device B to create a feasibility evaluation task object based on the creation request information of the feasibility evaluation task.

Specifically, the creation request information of the feasibility evaluation task may include an identifier of the feasibility evaluation task, an identifier of the first network requirement information, the first network requirement information, and the feedback requirement information of the modification recommendation of the first network requirement information.

This step is similar to the method S402. For brevity, details are not described herein again.

S603: The device B determines the feasibility evaluation task object based on the creation request information of the feasibility evaluation task, and configures, in a second feasibility evaluation task, the first network requirement information and the feedback requirement information of the modification recommendation of the first network requirement information.

This step is similar to the method S403. For brevity, details are not described herein again.

Optionally, in S604, the device B sends creation result information of the feasibility evaluation task object to the device A, where the creation result information of the feasibility evaluation task object includes the identifier of the feasibility evaluation task.

This step is similar to the method S404. For brevity, details are not described herein again.

S605: The device B determines a result of the feasibility evaluation task and information about the modification recommendation of the first network requirement information based on the creation result information of the feasibility evaluation task object.

This step is similar to the method S405. For brevity, details are not described herein again.

In an implementation, when the creation request information of the feasibility evaluation task includes the feedback requirement information of the modification recommendation of the first network requirement information, after performing feasibility evaluation, a feasibility evaluation execution device determines the information about the modification recommendation of the first network requirement information.

In an implementation, when the feedback requirement information of the modification recommendation of the first network requirement information indicates that the information about the modification recommendation corresponding to the first network requirement information needs to be fed back, the device B determines information about the modification recommendation corresponding to the first network requirement information, where the information about the modification recommendation includes a parameter name of at least one recommended piece of network requirement information and a parameter value of the at least one recommended piece of network requirement information.

Optionally, when a feasibility evaluation result is infeasible, that is, there is no abundant network resource to meet specified network requirement information, the feasibility evaluation execution device determines, through calculation based on an available network resource, configuration of a network resource that can meet the first network requirement information. That is, information about one or more modification recommendations is formed.

For example, when the specified network requirement information is (service type: URLLC; coverage area: Pudong Jinqiao; maximum quantity of users: 500,000; latency: 10 ms; and rate: 500 Mbps), the feasibility evaluation execution device determines, during evaluation, that there is no abundant PRB resource to meet service requirement information. However, for an available PRB resource, the feasibility evaluation execution device may determine that the following two pieces of information of a modification recommendation can meet the first network requirement information, and form the following two pieces of information of the modification recommendation:
information 1 of the modification recommendation: (service type: URLLC; coverage area: Pudong Jinqiao; maximum quantity of users: 300,000; latency: 10 ms; and rate: 300 Mbps); and
information 2 of the modification recommendation: (service type: URLLC; coverage area: Pudong Jinqiao; maximum quantity of users: 500,000; latency: 20 ms; and rate: 400 Mbps).

Optionally, when the feasibility evaluation result is feasible, that is, there are abundant network resources to meet the specified service requirement, the feasibility evaluation execution device calculates and determines, based on the available network resource, information about the network resource that can meet the first network requirement information, to form the information about the one or more modification recommendations.

For example, when the specified network requirement information is (service type: URLLC; coverage area: Pudong Jinqiao; maximum quantity of users: 500,000; latency: 10 ms; and rate: 500 Mbps), the feasibility evaluation execution device determines, through the calculation based on the available network resource, that the following network requirement information can be met, and the following information about the modification recommendation is formed:
information about the modification recommendation: (service type: URLLC; coverage area: Pudong Jinqiao; maximum quantity of users: 500,000; latency: 5 ms; and rate: 700 Mbps).

Optionally, in S606, the device A sends query information of the information about the modification recommendation to the device B, where the query information of the information about the modification recommendation is used for querying the feasibility evaluation result of the first network requirement information and the information about the modification recommendation of the first network requirement information.

In an implementation, the feasibility evaluation control device sends the query information of the modification recommendation to the feasibility evaluation execution device, where the query information of the information about the modification recommendation indicates to query information about one or more modification recommendations provided for the first network requirement information.

S607: The device B sends feedback information of the feasibility evaluation result to the device A, where the feedback information of the feasibility evaluation result includes the identifier of the feasibility evaluation task and the information about the modification recommendation of the first network requirement information.

In an implementation, when the feedback requirement information of the modification recommendation of the first network requirement information indicates that information about the modification recommendation corresponding to the first network requirement information needs to be fed back, the device B sends the information about the modification recommendation corresponding to the first network requirement information to the device A, where the information about the modification recommendation includes a parameter name of at least one piece of network requirement information and a parameter value of the at least one piece of network requirement information.

Optionally, in S608, the device A determines information about a proper modification recommendation based on information about the modification recommendation that is of one or more pieces of first network requirement information and that is sent by the device B, where the information about the proper modification recommendation is determined based on a current network resource and the first network requirement information.

In an implementation, after obtaining the feasibility evaluation result and the information about the at least one modification recommendation of the first network requirement information that are sent by the feasibility execution device, the feasibility evaluation control device determines, with reference to a network requirement of the feasibility evaluation control device, whether to accept the information about the modification recommendation. After the feasibility evaluation control device obtains the information about a plurality of modification recommendations, the feasibility evaluation control device further needs to select a proper piece of information about the modification recommendation from the information about the plurality of modification recommendations to deploy the first network requirement information.

S609: The device A sends second deployment request information to the device B, where the second deployment request information indicates to deploy the first network requirement information on a second resource, and the second resource indicates configuration of a network resource corresponding to the information about the modification recommendation of the first network requirement information.

In an implementation, the feasibility evaluation control device sends the second deployment request information to the feasibility evaluation execution device, where the second deployment request information indicates to deploy the first network requirement information on the second resource, and the second resource indicates the configuration of the network resource corresponding to the information about the modification recommendation of the first network requirement information.

Specifically, the second deployment request information includes the identifier of the first network requirement information and the information about the modification recommendation of the first network requirement information.

S610: The device B deploys the first network requirement information based on the second deployment request information.

In an implementation, the feasibility evaluation execution device deploys the network resource of the first network requirement information based on the identifier of the first network requirement information and the information about the modification recommendation of the first network resource that are in the second deployment request.

By introducing the feedback requirement information of the modification recommendation of the first network requirement information into the feasibility evaluation task, the feasibility evaluation execution device may be controlled to determine the information about the modification recommendation of the first network requirement information. To be specific, when a current network resource does not meet the first network requirement information, information about a modification recommendation that can meet the first network requirement information is determined; and when the current network resource can meet the first network requirement information, the information about the modification recommendation of the first network requirement information. In addition, the information about the modification recommendation of the first network requirement information is obtained in the feasibility evaluation result, so that the feasibility evaluation control device obtains the information about the modification recommendation of the first network requirement information, to adjust configuration of a corresponding network resource. In this way, when performing feasibility evaluation on service quality, a carrier may obtain a corresponding network requirement recommendation, to guide the carrier to select proper network requirement information based on a network capability.

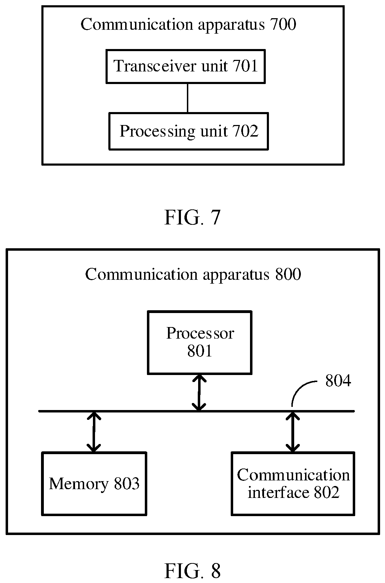

The foregoing describes in detail the information transmission method provided in embodiments of this application with reference to FIG. 3 to FIG. 6. The following describes in detail the communication apparatus provided in embodiments of this application with reference to FIG. 7 and FIG. 8.

The following describes in detail the communication apparatus provided in embodiments of this application with reference to FIG. 7 and FIG. 8. It should be understood that descriptions of apparatus embodiments correspond to the descriptions of the method embodiments. Therefore, for content that is not described in detail, refer to the foregoing method embodiments. For brevity, some content is not described again.

In embodiments of this application, function device division may be performed on a transmitting end device or a receiving end device based on the foregoing method examples. For example, each function device may be obtained through division corresponding to each function, or two or more functions may be integrated in one processing device. The integrated device may be implemented in a form of hardware, or may be implemented in a form of a software function device. It should be noted that, in this embodiment of this application, division into the devices is an example, and is merely a logical function division. In actual implementation, another division manner may be used.

Based on the foregoing method, FIG. 7 is a schematic block diagram of an example of a communication device according to an embodiment of this application. The communication device includes a transceiver unit 701 and a processing unit 702. The transceiver unit 701 is configured to implement content interaction between the communication device and another unit or network element. The processing unit 702 is configured to implement data processing by the communication device.

It should be understood that the transceiver unit 701 in this embodiment of this application may be implemented by a transceiver or a transceiver-related circuit component, and the processing unit 702 may be implemented by a processor or a processor-related circuit component (or referred to as a processing circuit).

For example, the communication device may be a communication apparatus device, or may be a chip applied to a communication apparatus device, or another combined component or component that has a function of the foregoing communication apparatus device.

For example, when the communication device is a device corresponding to a feasibility evaluation control device, the transceiver unit 701 and the processing unit 702 can support an action completed by the device corresponding to the feasibility evaluation control device in the foregoing method examples.

For example, when the communication device is a device corresponding to a feasibility evaluation execution device, the transceiver unit 701 and the processing unit 702 can support an action completed by the device corresponding to the feasibility evaluation execution device in the foregoing method examples.

An embodiment of this application further provides a communication apparatus. As shown in FIG. 8, the communication apparatus includes a processor 801, a communication interface 802, and a memory 803. The processor 801, the communication interface 802, and the memory 803 may be connected to each other by using a bus 804. The bus 804 may be a peripheral component interconnect (peripheral component interconnect, PCI) bus, an extended industry standard architecture (extended industry standard architecture, EISA) bus, or the like. The bus 804 may be classified into an address bus, a data bus, a control bus, and the like.

As shown in FIG. 8, only one thick line is used for representing the bus in FIG. 8, but this does not mean that there is only one bus or only one type of bus. The processor 801 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The memory 803 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

The processor 801 is configured to implement a data processing operation of the communication apparatus. The communication interface 802 is configured to implement a receiving and sending operation of the communication apparatus. A function and an implementation process of the transceiver unit in FIG. 7 may be implemented by using the communication interface 802 in the communication apparatus shown in FIG. 8.

For example, when the communication apparatus is a device corresponding to a feasibility evaluation control device, the processor 801, the communication interface 802, and the memory 803 can support an action completed by the device corresponding to the feasibility evaluation control device in the foregoing method examples.

For example, when the communication apparatus is a device corresponding to a feasibility evaluation execution device, the processor 801, the communication interface 802, and the memory 803 can support an action completed by the device corresponding to the feasibility evaluation execution device in the foregoing method examples.

It may be understood that the communication apparatus 800 may further include another apparatus, for example, an input apparatus, an output apparatus, or a battery.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The memory in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. It is clear that the storage medium may be a component of the processor. The processor and the storage medium may be disposed in an ASIC. In addition, the ASIC may be located in a network device or a terminal device. It is clear that the processor and the storage medium may alternatively exist as discrete components in a network device or a terminal device.

Aspects or features of this application may be implemented as a method, an apparatus, or a product that uses standard programming and/or engineering technologies. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, contain and/or carry instructions and/or data.

Based on the method provided in embodiments of this application, this application further provides a computer program product. The computer program product includes a computer program or a group of instructions. When the computer program or the group of instructions is run on a computer, the computer is enabled to perform the method according to any one of the embodiments shown in FIG. 3 to FIG. 6.

Based on the method provided in embodiments of this application, this application further provides a computer-readable storage medium. The computer-readable storage medium stores a program or a group of instructions. When the program or the group of instructions is run on a computer, the computer is enabled to perform the method according to any one of the embodiments shown in FIG. 3 to FIG. 6.

Based on the method provided in embodiments of this application, this application further provides a communication system. The communication system includes the foregoing apparatuses or devices.

This application further provides a computer-readable medium. The computer-readable medium stores a computer program (also referred to as code or instructions). When the computer program is run on a computer, the computer is enabled to perform the foregoing method.

This application further provides a chip. A processing circuit is disposed on the chip, and the processing circuit is configured to perform the foregoing method.

All or some of the foregoing embodiments may be implemented by software, hardware, firmware, or any combination thereof. When software is used for implementing the embodiments, all or some of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a special-purpose computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", ... are merely used to distinguish between different objects, for example, to distinguish between different network devices, and constitute no limitation on the scope of embodiments of this application. Embodiments of this application are not limited thereto.

It should be further understood that in this application, "when" and "if" both mean that a network element performs corresponding processing in an objective situation, are not intended to limit time, do not require that the network element has a determining action during implementation, and do not imply that there is any other limitation.

It should be further understood that, in embodiments of this application, "B corresponding to A" represents that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A feasibility evaluation method, wherein the method comprises:
receiving, by an execution device, first information sent by a control device, wherein the first information is for requesting the execution device to perform feasibility evaluation on first network requirement information, and the first information comprises the first network requirement information, wherein
the first information comprises at least one of first indication information, second indication information, or third indication information, wherein the first indication information indicates the execution device to reserve a network resource corresponding to the first network requirement information, the second indication information indicates the execution device to feed back information about the network resource corresponding to the first network requirement information, and the third indication information indicates the execution device to feed back information about a modification recommendation of the first network requirement information;
performing, by the execution device, feasibility evaluation on the first network requirement information based on the first information, to determine second information, wherein the second information comprises a feasibility evaluation result, wherein
when the first information comprises the first indication information, the second information comprises a reservation status of the network resource corresponding to the first network requirement information;
when the first information comprises the second indication information, the second information comprises the information about the network resource corresponding to the first network requirement information; or
when the first information comprises the third indication information, the second information comprises the information about the modification recommendation of the first network requirement information; and
sending, by the execution device, the second information to the control device.

2. The method according to claim 1, wherein when the first information comprises the first indication information, the method further comprises:
determining, by the execution device, a first network resource as the network resource corresponding to the first network requirement information; and
setting, by the execution device, the reservation status of the first network resource to reserved, wherein the reservation status comprises reserved, unreserved, or released.

3. The method according to claim 2, wherein the method further comprises:
receiving, by the execution device, third information sent by the control device, wherein the third information indicates the execution device to release, when a network resource reserved for the first network requirement information is occupied, the network resource and reserve the network resource for the first network requirement information.

4. The method according to claim 3, wherein the first indication information further comprises the third information.

5. The method according to claim 1 or 2, wherein the first indication information further indicates first duration, and the first duration is duration in which the network resource is reserved for the first network requirement information.

6. The method according to claim 5, wherein when duration in which the network resource is reserved for the first network requirement information exceeds the first duration, the method further comprises:
releasing, by the execution device, the network resource reserved for the first network requirement information.

7. The method according to claim 6, wherein the method further comprises:
sending, by the execution device, fourth information to the control device, wherein the fourth information indicates that the reservation status of the network resource reserved for the first network requirement information is updated to released or unreserved.

8. The method according to any one of claims 1 to 7, wherein when the first information comprises the second indication information, the performing, by the execution device, feasibility evaluation on the first network requirement information, to determine second information comprises:
determining, by the execution device, the information about the network resource corresponding to the first network requirement information, wherein the information about the network resource comprises a network resource type of the first network requirement information and a network resource quantity of the first network requirement information.

9. The method according to claim 8, wherein the method further comprises:
receiving, by the execution device, allocation request information of the network resource sent by the control device, wherein the allocation request information of the network resource comprises the information about the network resource corresponding to the first network requirement information; and
allocating, by the execution device, the network resource corresponding to the first network requirement information to the first network requirement information.

10. The method according to any one of claims 1 to 9, wherein when the first information comprises the third indication information, the performing, by the execution device, feasibility evaluation on the first network requirement information, to determine second information comprises:
determining, by the execution device, the information about the modification recommendation corresponding to the first network requirement information, wherein the information about the modification recommendation comprises a parameter name of at least one piece of recommended network requirement information and a parameter value of the at least one piece of recommended network requirement information.

11. The method according to any one of claims 1 to 10, wherein the network resource comprises at least one of the following resources: a radio resource, a core network resource, and a virtual resource.

12. A feasibility evaluation method, wherein the method comprises:
sending, by a control device, first information to an execution device, wherein the first information is for requesting the execution device to perform feasibility evaluation on first network requirement information, and the first information comprises the first network requirement information, wherein
the first information comprises at least one of first indication information, second indication information, or third indication information, wherein the first indication information indicates the execution device to reserve a network resource corresponding to the first network requirement information, the second indication information indicates the execution device to feed back information about the network resource corresponding to the first network requirement information, and the third indication information indicates the execution device to feed back information about a modification recommendation of the first network requirement information; and
receiving, by the control device, second information sent by the execution device, wherein the second information comprises a feasibility evaluation result, wherein
when the first information comprises the first indication information, the second information comprises a reservation status of the network resource corresponding to the first network requirement information;
when the first information comprises the second indication information, the second information comprises the information about the network resource corresponding to the first network requirement information; or
when the first information comprises the third indication information, the second information comprises the information about the modification recommendation of the first network requirement information.

13. The method according to claim 12, wherein when the first information comprises the first indication information, the method further comprises:
receiving, by the control device, a reservation status of a first network resource sent by the execution device, wherein the first network resource is the network resource corresponding to the first network requirement information, and the reservation status comprises reserved, unreserved, or released.

14. The method according to claim 12, wherein the method further comprises:
sending, by the control device, third information to the execution device, wherein the third information indicates the execution device to release, when a network resource reserved for the first network requirement information is occupied, the network resource and reserve the network resource for the first network requirement information.

15. The method according to claim 14, wherein the first indication information further comprises the third information.

16. The method according to claim 12 or 13, wherein the first indication information further indicates first duration, and the first duration is duration in which the network resource is reserved for the first network requirement information.

17. The method according to claim 16, wherein when duration in which the network resource is reserved for the first network requirement information exceeds the first duration, the method further comprises:
receiving, by the control device, fourth information sent by the execution device, wherein the fourth information indicates that the reservation status of the network resource reserved for the first network requirement information is updated to released or unreserved.

18. The method according to any one of claims 12 to 17, wherein when the first information comprises the second indication information, the method further comprises:
receiving, by the control device, the information that is about the network resource corresponding to the first network requirement information and that is sent by the execution device, wherein the information about the network resource comprises a network resource type of the first network requirement information and a network resource quantity of the first network requirement information.

19. The method according to claim 18, wherein the method further comprises:
sending, by the control device, allocation request information of the network resource to the execution device, wherein the allocation request information of the network resource comprises the information about the network resource corresponding to the first network requirement information.

20. The method according to any one of claims 12 to 19, wherein when the first information comprises the third indication information, the method further comprises:
receiving, by the control device, the information that is about the modification recommendation corresponding to the first network requirement information and that is sent by the execution device, wherein the information about the modification recommendation comprises a parameter name of at least one piece of network requirement information and a parameter value of the at least one piece of network requirement information.

21. A feasibility evaluation method, wherein the method comprises:
sending, by a control device, first information to an execution device, wherein the first information is for requesting the execution device to perform feasibility evaluation on first network requirement information, and the first information comprises the first network requirement information, wherein
the first information comprises at least one of first indication information, second indication information, or third indication information, wherein the first indication information indicates the execution device to reserve a network resource corresponding to the first network requirement information, the second indication information indicates the execution device to feed back information about the network resource corresponding to the first network requirement information, and the third indication information indicates the execution device to feed back information about a modification recommendation of the first network requirement information;
performing, by the execution device, feasibility evaluation on the first network requirement information based on the first information, to determine second information, wherein the second information comprises a feasibility evaluation result, wherein
when the first information comprises the first indication information, the second information comprises a reservation status of the network resource corresponding to the first network requirement information;
when the first information comprises the second indication information, the second information comprises the information about the network resource corresponding to the first network requirement information; or
when the first information comprises the third indication information, the second information comprises the information about the modification recommendation of the first network requirement information; and
sending, by the execution device, the second information to the control device.

22. The method according to claim 21, wherein when the first information comprises the first indication information, the method further comprises:
determining, by the execution device, a first network resource as the network resource corresponding to the first network requirement information;
setting, by the execution device, the reservation status of the first network resource to reserved, wherein the reservation status comprises reserved, unreserved, or released; and
sending, by the execution device, the reservation status of the first network resource to the control device.

23. The method according to claim 21 or 22, wherein when the first information comprises the second indication information, the method further comprises:
determining, by the execution device, the information about the network resource corresponding to the first network requirement information, wherein the information about the network resource comprises a network resource type of the first network requirement information and a network resource quantity of the first network requirement information; and
sending, by the execution device, the information about the network resource to the control device.

24. The method according to any one of claims 21 to 23, wherein when the first information comprises the third indication information, the method further comprises:
determining, by the execution device, the information about the modification recommendation corresponding to the first network requirement information, wherein the information about the modification recommendation comprises a parameter name of at least one piece of recommended network requirement information and a parameter value of the at least one piece of recommended network requirement information; and
sending, by the execution device, the information about the modification recommendation to the control device.

25. A feasibility evaluation system, wherein the feasibility evaluation system comprises a control device and an execution device, wherein
sending, by the control device, first information to the execution device, wherein the first information indicates the execution device to perform feasibility evaluation on first network requirement information, and the first information comprises first indication information, wherein
the first information comprises at least one of first indication information, second indication information, or third indication information, wherein the first indication information indicates the execution device to reserve a network resource corresponding to the first network requirement information, the second indication information indicates the execution device to feed back information about the network resource corresponding to the first network requirement information, and the third indication information indicates the execution device to feed back information about a modification recommendation of the first network requirement information;
performing, by the execution device, feasibility evaluation on the first network requirement information based on the first information, to determine second information, wherein the second information comprises a feasibility evaluation result, wherein
when the first information comprises the first indication information, the second information comprises a reservation status of the network resource corresponding to the first network requirement information;
when the first information comprises the second indication information, the second information comprises the information about the network resource corresponding to the first network requirement information; or
when the first information comprises the third indication information, the second information comprises the information about the modification recommendation of the first network requirement information; and
sending, by the execution device, the second information to the control device.

26. A communication apparatus, comprising a processor and an interface component, to implement the method according to any one of claims 1 to 11.

27. A communication apparatus, comprising a processor and an interface component, to implement the method according to any one of claims 12 to 20.

28. A computer-readable storage medium, wherein the computer-readable storage medium stores a computer program or instructions, and when the computer program or the instructions are executed by a processor, the method according to any one of claims 1 to 20 is performed.

29. A computer program product comprising instructions, wherein when the instructions are executed on a computer, the method according to any one of claims 1 to 20 is performed.

30. A chip system, comprising a processor, wherein the processor is configured to: invoke a computer program or instructions from a memory, and run the computer program or the instructions, so that a communication apparatus on which the chip system is installed performs the method according to any one of claims 1 to 20.
